## Europäisches Patentamt

## European Patent Office

## Office européen des brevets

(11) Veröffentlichungsnummer: **0 279 074**
**B1**

(12) # EUROPÄISCHE PATENTSCHRIFT

(45) Veröffentlichungstag der Patentschrift:
**23.11.89**

(51) Int. Cl.⁴: **A43B 5/04**, B29C 67/22

(21) Anmeldenummer: **87119211.8**

(22) Anmeldetag: **24.12.87**

(54) Verfahren zur Herstellung eines Innenschuhes für einen Sportschuh und Innenschuh, insbesondere für einen Skischuh.

(30) Priorität: **20.02.87  CH 651/87**

(43) Veröffentlichungstag der Anmeldung:
**24.08.88 Patentblatt 88/34**

(45) Bekanntmachung des Hinweises auf die Patenterteilung:
**23.11.89 Patentblatt 89/47**

(84) Benannte Vertragsstaaten:
**AT CH DE FR IT LI SE**

(56) Entgegenhaltungen:
**EP-A- 0 107 841**
**DE-U- 7 141 079**
**US-A- 4 246 213**

(73) Patentinhaber: **Raichle Sportschuh AG,
Bottighoferstrasse, CH-8280 Kreuzlingen(CH)**

(72) Erfinder: **Riethmann, Werner, Hofstattstrasse 11,
CH-8280 Kreuzlingen(CH)**

(74) Vertreter: **Patentanwälte Schaad, Balass & Partner,
Dufourstrasse 101 Postfach, CH-8034 Zürich(CH)**

## Beschreibung

Die Erfindung bezieht sich auf ein Verfahren nach dem Oberbegriff des Anspruchs 1 und auf einen Innenschuh.

Insbesondere für Skischuhe bestimmte Innenschuhe sollen vor allem im Bereich des Schienbeins bei dessen Haltung in Vorlagestellung zunehmend weniger nachgiebig gepolstert sein. Für diesen Zweck hat es sich bereits bewährt, auf der Innenseite ein weicheres und auf der Aussenseite ein vergleichbar weniger weiches Polstermaterial zu verwenden. Dazu eignen sich insbesondere Schaumstoffe unterschiedlicher Dichte.

Ein aus der EP-A1 0 107 841 bekannter Innenschuh weist als Polsterung eine erste, auf einer Futterschicht angeordnete, industriell hergestellte Schicht aus einem relativ weichen Schaumstoff auf, die den Fuss des Schuhträgers im wesentlichen überspannt. Mit der ersten Schicht ist eine zweite, auf übliche Weise hergestellte Schicht aus einem halbsteifen oder steifen Material mittels eines Saumes verbunden. Die zweite Schicht überspannt im wesentlichen den rückseitigen Bereich des Fusses, insbesondere die Ferse und den Knöchel, sowie auch einen vorderen Bereich und überlappt dabei stellenweise die erste Schicht.

Ueblicherweise werden die beiden Polsterschichten zugeschnitten und durch bekannte Mittel entlang einem Saum zusammengeheftet. Ein solches bekanntes Verfahren ist relativ aufwendig in der Herstellung und zudem mit dem Nachteil behaftet, dass sich die Polsterschichten beim Anziehen und Tragen des Skischuhes gegeneinander verschieben können.

Es ist zwar auch möglich, die eine der beiden Schichten auf ein vorgeformtes Kunststoffteil anderer Härte in einer Form aufzuschäumen, so dass die beiden Polsterschichten unterschiedlicher Härte bereits miteinander verbunden sind. Dann müssen diese Schichten jedoch mit der zudem erforderlichen Futterschicht zusammengebracht und mit dieser verbunden werden.

Da die weichere Polsterschicht zwischen der Futterschicht und der härteren Polsterschicht liegt, ist es nicht möglich, zuerst die weichere Polsterschicht auf die Futterschicht aufzuschäumen und danach die härtere Polsterschicht auf die weichere, weil bei einer solchen Reihenfolge die weichere Polsterschicht beim Aufschäumen der härteren Polsterschicht infolge des grösseren Expansionsdruckes zusammengedrückt werden würde. Daher erfordern alle bekannte Verfahren einen relativ hohen Aufwand bei der Herstellung des Innenschuhes.

Die Aufgabe der Erfindung ist daher die Angabe eines mit geringerem Aufwand verbundenen Herstellungsverfahrens und die Schaffung eines Innenschuhes, dessen unterschiedliche Polsterschichten nicht gegeneinander verschiebbar sind.

Die Lösung der Aufgabe gelingt durch die in den kennzeichnenden Teilen der Ansprüche 1 und 8 angegebenen Merkmale.

Das erfindungsgemässe Verfahren ermöglicht in wenigen Arbeitsgängen die Herstellung einer zusammenhängenden, aus der Futterschicht und den beiden Polsterschichten unterschiedlicher Härte bestehenden Verbundschicht. Dabei ist es im Gegensatz zu einem flächigen Zuschnitt zudem möglich, jede der beiden Polsterschichten plastisch zu gestalten, um eine optimale Passform zu erzielen. Die Schichten haften dabei flächig aneinander, so dass ein Verrutschen unmöglich ist.

Eine Ausgestaltung nach Anspruch 2 ist rationell und gewährleistet zudem, dass sich die zweite geschäumte Schicht beim Einbringen entlang der Umrisslinie exakt begrenzen lässt.

Bei einer Ausgestaltung nach Anspruch 3 ist die Kavität der ersten Schäumform unter Einbezug der Futterschicht für die Schäumlage der härteren Schicht zu bemessen und diejenige der zweiten Schäumform für die fertige Verbundschicht.

Bei einer Ausgestaltung nach Anspruch 4 ist nur der Deckel der Schäumform zu wechseln, so dass die Futterschicht und die darauf aufgebauten Schichten am Kernteil befestigt bleiben können, bis die Verbundschicht fertig ist.

Die Ansprüche 5 bis 7 enthalten weitere bevorzugte Ausgestaltungen des erfindungsgemässen Verfahrens.

Anhand der Zeichnungen wird ein Ausführungsbeispiel der Erfindung näher erläutert. Es zeigt:

Fig. 1 Eine perspektivische Ansicht eines Innenschuhes,

Fig. 2 den Innenschuh im Längsschnitt,

Fig. 3 eine Vorrichtung zum Anheften einer Trennfolie an einer Futterschicht,

Fig. 4 ein Kernteil einer Schäumform im Querschnitt mit daran vorübergehend befestigter Futterschicht und Trennfolie,

Fig. 5 die geschlossene Schäumform mit einer darin geschäumten ersten Schicht eines härteren Polsterwerkstoffes und

Fig. 6 die geschlossene Schäumform mit einem zweiten Deckel und einer darin geschäumten zweiten Schicht eines weicheren Polsterwerkstoffes entlang der Schnittlinie VI - VI nach der Fig. 1.

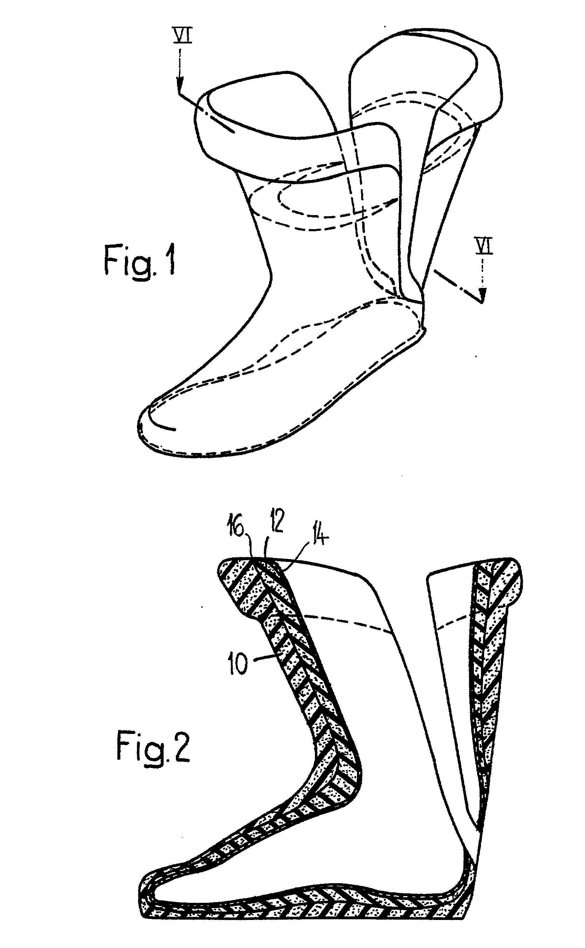

In der Fig. 1 ist der für einen Skischuh bestimmte Innenschuh perspektivisch dargestellt. Aus dem Längsschnitt dieses Innenschuhes nach der Fig. 2 ist ersichtlich, dass dieser im wesentlichen zwei übereinanderliegende Schichten aufweist, die aus Polsterwerkstoffen unterschiedlicher Härte bestehen. Als Polsterwerkstoffe dienen insbesondere mit unterschiedlichem Expansionsdruck geschäumte Polyurethan-Schaum-Werkstoffe. Von den beiden genannten Schichten liegt die härtere Schicht 10 aussen und die weichere Schicht 12 innen. Gegen den Fuss des Trägers ist die weichere Schicht 12 durch eine ganz innen liegende Futterschicht 14 begrenzt. Während die Futterschicht 14 gleichmässig dick ist, sind die Polsterschichten 10 und 12 der Beanspruchung und der Passform entsprechend unterschiedlich dick ausgebildet.

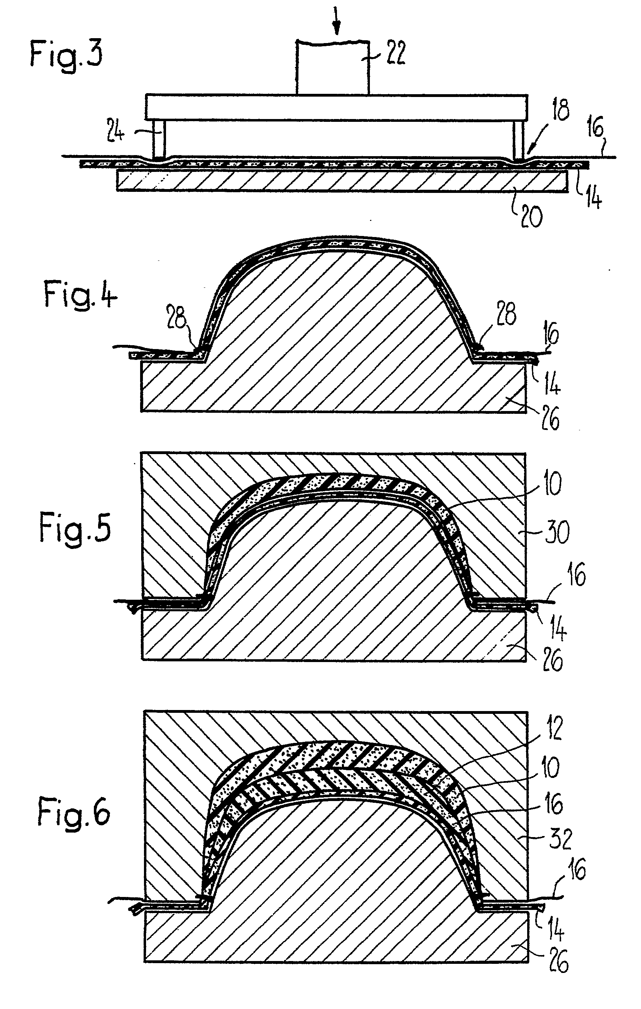

Nachfolgend wird anhand der Fig. 3 bis 6 die Herstellung des Innenschuhes näher erläutert. Die Fig. 3 zeigt, wie auf die Futterschicht 14 eine Trennfolie 16 entlang einer vorbestimmten Umrisslinie 18 mittels einer Schweissvorrichtung angeheftet wird. Die Schweissvorrichtung enthält eine Grundplatte 20 und einen darauf abgesenkten Stempel 22 mit für Hochfrequenzschweissung bestimmten Schweisselektroden 24.

Gemäss Fig. 4 ist die Futterschicht 14 zusammen mit der Trennfolie 16 auf einem Kernteil 26 einer Schäumform mittels Krallenhaken 28 befestigt.

In der Fig. 5 ist die zweiteilige Schäumform mittels eines ersten Deckels 30 geschlossen. Die Kavität dieser Schäumform gibt die Schäumlage für die erste Schicht 10 frei, welche unmittelbar auf die Trennfolie 16 aufgeschäumt wird.

In der Fig. 6 ist das gleiche Kernteil 26 jedoch mit einem zweiten Deckel 32 dargestellt, welcher die Kavität der ersten und der zweiten Schäumlage 10 und 12 unter Berücksichtigung der Futterschicht 14 freigibt. Die zweite Schäumlage wird in dieser Schäumform zwischen der Futterschicht 14 und der mit der ersten Schäumlage 10 verbundenen Trennfolie 16 eingebracht. Dabei wird die erste Schäumlage 10 derart aufgeweitet, bis sie den zweiten Deckel 32 ausfüllt.

Durch die erfindungsgemäss Lösung ist es dank der Trennfolie 16 möglich, die beiden Schäumlagen 10 und 12 und Futterschicht 14 zu einer Verbundschicht zu vereinigen, welche der Schäumform nach Oeffnen des Deckels 32 durch Lösen von den Krallenhaken 28 (Fig. 4) entnommen werden kann. Die Trennfolie 16 befindet sich bei der fertigen Verbundschicht zwischen der härteren Schicht 10 und der weicheren Schicht 12 und ist beidseitig mit den angrenzenden Schichten verbunden. Das Endergebnis der angegebenen Verfahrensschritte sind die der Skischuhe angepassten fertigen Verbundfolien, die sich anschliessend zum Innenschuh zusammensetzen lassen.

## Patentansprüche

1. Verfahren zur Herstellung eines Innenschuhes für einen Sportschuh, insbesondere einen Skischuh, mit mindestens zwei übereinander liegenden Schichten (10, 12) unterschiedlich elastischer Polsterwerkstoffe, von denen die weichere Schicht (12) innen liegt, dadurch gekennzeichnet, dass eine Trennfolie (16) entlang einer vorbestimmten Umrisslinie (18) auf die nach aussen gerichtete Seite einer Futterschicht (14) geheftet wird, dass auf die nach aussen gerichtete Seite der Trennfolie (16) eine erste geschäumte Schicht (10) des härteren Polsterwerkstoffes aufgebracht wird und dass abschliessend die zweite geschäumte Schicht (12) des weicheren Polsterwerkstoffes zwischen die Futterschicht (14) und die Trennfolie (16) eingebracht wird.

2. Verfahren nach Anspruch 1, dadurch gekennzeichnet, dass die Trennfolie (16) mittels Schweissung auf die Futterschicht (14) geheftet wird.

3. Verfahren nach Anspruch 1 oder 2, dadurch gekennzeichnet, dass die erste geschäumte Schicht (10) in einer ersten Schäumform (26, 30) mit einem der ersten Schicht (10) angepassten Hohlraum aufgebracht wird und dass die zweite geschäumte Schicht (12) in einer zweiten Schäumform (26, 32) mit einem an beide Schichten (10, 12) angepassten Hohlraum eingebracht wird.

4. Verfahren nach Anspruch 3, dadurch gekennzeichnet, dass die beiden Schäumformen zweiteilig sind und einen gemeinsamen Kernteil (26) aufweissen, auf den die Futterschicht (14) mit der angehefteten Trennfolie (16) vor dem Schliessen der ersten Schäumform befestigt wird.

5. Verfahren nach Anspruch 4, dadurch gekennzeichnet, dass die Befestigung mittels Krallenhaken (28) erfolgt.

6. Verfahren nach Anspruch 2, dadurch gekennzeichnet, dass mittels Hochfrequenzerwärmung geschweisst wird.

7. Verfahren nach einem der vorstehenden Ansprüche, dadurch gekennzeichnet, dass als Polsterwerkstoffe Polyurethan-Schaum verwendet wird.

8. Innenschuh für einem Sportschuh, insbesondere einen Skischuh, mit einer innen liegenden Futterschicht (14), der sich mindestens zwei übereinander liegende Schichten (10, 12) unterschiedlich elastischer Polsterwerkstoff nach aussen anschliessen, von denen die weichere Schicht (12) zwischen der Futterschicht (14) und der aussen liegenden härteren Schicht (10) angeordnet ist, dadurch gekennzeichnet, dass zwischen der weicheren (12) und der härteren Schicht (10) eine Trennfolie (16) angeordnet ist und dass die Futterschicht (14) sowie die weichere (12) und die härtere Schicht (10) zusammen mit der Trennfolie (16) eine zusammenhängende Verbundschicht bilden.

## Revendications

1. Procédé pour fabriquer une chaussure intérieure pour une chaussure de sport, notamment une chaussure de ski, comportant au moins deux couches superposées (10, 12) réalisées en des matériaux de rembourrage présentant des élasticités différentes, la couche la plus molle (12) étant située à l'intérieur, caractérisé en ce qu'on fixe une feuille de séparation (16) le long d'une ligne prédéterminée de contour (18) sur la face extérieure d'une couche de revêtement interne (14), qu'on dépose une première couche (10) formée d'un matériau de rembourrage plus dur, à l'état de mousse, sur la face extérieure, de la feuille de séparation (16) et qu'enfin on insère la seconde couche (12) du second matériau de rembourrage plus mou, à l'état de mousse, entre la couche de revêtement interne (14) et la feuille de séparation (16).

2. Procédé selon la revendication 1, caractérisé en ce qu'on fixe la feuille de séparation (16) par soudage sur la couche de revêtement interne (14).

3. Procédé selon la revendication 1 ou 2, caractérisé en ce qu'on dépose la première couche (10) à l'état de mousse dans un premier moule (26, 30) de formation de la mousse, comportant une cavité adaptée à la première couche (10), et qu'on introduit la seconde couche (12) en forme de mousse dans un second moule (26, 32) de formation de la mousse, comportant une cavité adaptée aux deux couches (10, 12).

4. Procédé selon la revendication 3, caractérisé en ce que les deux moules de formation de la mousse sont formés de deux éléments et comportent une partie commune formant noyau (26), sur laquelle on fixe la couche de revêtement interne (14), à laquelle est fixée la feuille de séparation (16), avant la fermeture du premier moule de formation de la mousse.

5. Procédé selon la revendication 4, caractérisé en ce que la fixation est réalisée à l'aide de crochets à griffes (28).

6. Procédé selon la revendication 2, caractérisé en ce qu'on réalise le soudage au moyen d'un chauffage à haute fréquence.

7. Procédé selon l'une des revendications précédentes, caractérisé en ce qu'on utilise, comme matériaux de rembourrage, de la mousse de polyuréthane.

8. Chaussure intérieure pour une chaussure de sport, notamment une chaussure de ski, comportant une couche de revêtement interne (14), à laquelle se raccorde, sur le côté extérieur, au moins deux couches superposées (10, 12) constituées par des matériaux de rembourrage possédant des élasticités différentes et parmi lesquelles la couche la plus molle (12) est disposée entre la couche de revêtement interne (14) et la couche extérieure plus dure (10), caractérisée en ce qu'une feuille de séparation (16) est disposée entre la couche la plus molle (12) et la couche la plus dure (10) et que la couche de revêtement interne (14) ainsi que la couche la plus molle (12) et la couche la plus dure (10) forment, conjointement avec la feuille de séparation (16), une couche composite d'un seul tenant.

**Claims**

1. Method of making an inner shoe for a sports shoe, in particular a ski shoe, with at least two superposed layers (10, 12) of differently elastic cushioning materials, the softer layer (12) of which is on the inside, characterized in that a separating film (16) is affixed along a predetermined contour line (18) to the outwardly directed side of a lining layer (14), in that a first foamed layer (10) of the harder cushioning material is coated onto the outwardly directed side of the separating film (16), and in that, finally, the second foamed layer (12) of the softer cushioning material is introduced between the lining layer (14) and the separating film (16).

2. Method according to Claim 1, characterized in that the separating film (16) is affixed to the lining layer (14) by means of welding.

3. Method according to Claim 1 or 2, characterized in that the first foamed layer (10) is coated on in a first foaming mould (26, 30) with a cavity matched to the first layer (10) and in that the second foamed layer (12) is introduced in a second foaming mould (26, 32) with a cavity matched to the two layers (10, 12).

4. Method according to Claim 3, characterized in that the two foaming moulds are in two parts and have a common core part (26), to which the lining layer (14), together with the affixed separating film (16), is fastened before the first foaming mould is closed.

5. Method according to Claim 4, characterized in that the fastening is obtained by means of claw hooks (28).

6. Method according to Claim 2, characterized in that welding is carried out by means of high-frequency heating.

7. Method according to one of the preceding claims, characterized in that polyurethane foam is used as cushioning materials.

8. Inner shoe for a sports shoe, in particular a ski shoe, with an inner lining layer (14), to which are joined on the outside at least two superposed layers (10, 12) of differently elastic cushioning material, the softer layer (12) of which is arranged between the lining layer (14) and the outer harder layer (10), characterized in that a separating film (16) is arranged between the softer layer (12) and harder layer (10), and in that the lining layer (14) and the softer layer (12) and harder layer (10) form, together with the separating film (16), a coherent composite layer.

Fig. 1

Fig. 2

Fig.3

Fig.4

Fig.5

Fig.6